Europäisches Patentamt

European Patent Office

Office européen des brevets

(19)

(11) Veröffentlichungsnummer: **0 003 511**
**B1**

(12) # EUROPÄISCHE PATENTSCHRIFT

(21) Anmeldenummer: **79100130.8**

(51) Int. Cl.³: **G 03 B 17/26**

(22) Anmeldetag: **17.01.79**

(54) **Kassette für Rollfilme mit Einziehsperre für das Filmende**

(30) Priorität: **28.01.78 DE 2803758**

(43) Veröffentlichungstag der Anmeldung:
**22.08.79 Patentblatt 79/17**

(45) Bekanntmachung des Hinweises auf die Patenterteilung:
**12.11.80 Patentblatt 80/23**

(84) Benannte Vertragsstaaten:
**BE CH DE FR GB IT**

(56) Entgegenhaltungen:
**DE - A - 2 255 749**
**DE - B - 2 139 876**
**DE - U - 7 721 745**

(73) Patentinhaber: **AGFA-GEVAERT**
**AKTIENGESELLSCHAFT**
**Patentabteilung**
**D - 5090 Leverkusen 1 (DE)**

(72) Erfinder: **Kluczynski, Achim**
**Im Eichholz 6**
**D - 5063 Overath (DE)**
**Altmann, Erik**
**Dusterweg 38**
**D - 4430 Mühlheim, Ruhr (DE)**

EP 0 003 511 B1

Kassette für Rollfilme mit Einziehsperre für das Filmende

Die Erfindung betrifft eine Kassette für Rollfilme mit einer spulenlosen Vorratskammer für einen Wickel aus Film und Papierschutzstreifen, einer Aufwickelkammer mit Spule zur Aufnahme des belichteten Films und des Papierschutzstreifens, einem dazwischen angeordneten Kasettensteg, der eine rückwärtige Auflagefläche sowie eine Führung für den Film bildet und dessen aufwickelseitiges Ende zusammen mit einer Filmbegrenzungswand der Aufwickelkammer einen zum Aufwickelraum der Aufwickelkammer führenden Filmkanal begrenzt und einer Sperrvorrichtung zum Verhindern des völligen Einziehens des Films in die Aufwickelkammer.

Derartige Filmkassette werden für photographische Filmaufnahmen in dafür bestimmte Aufnahmeapparaturen verwendet, zum Beispiel Pak 110 (Pocket). Die DE - OS 2 255 749 beschreibt eine derartige Kassette, wobei ein im Film zur Laufrichtung schräg angeordnetes längliches Loch in einen festen innerhalb des Aufwickelraumes befindlichen Haken einspringt. Durch besondere Formung des Hakens wird eine Aufwölbung des Filmes und somit eine Verklemmung des Filmendes erreicht, so daß der Film an einem 5 mm langen herausstehenden Ende erfaßt und im Dunkeln zur Entwicklung aus dem Aufwickelraum entnommen werden kann ohne die Kassette zu zerstören.

Bei ungünstiger Planlage des Filmes, die durch zu große Trockenheit oder Feuchte leicht in dem Aufnahmegerät entstehen kann, kommt es vor, daß das Filmloch nicht in den Haken einspringt, keine Sperrung erfolgt, die Kassette zur Entnahme des Filmes zerstört werden muß und es an den Film-Entwicklungsmaschinen zu Stillständen kommt.

In der DE - OS 2 715 554 und in der DE - OS 2 711 454 werden in der Kassette schwalbenschwanzförmige Vertiefungen eingearbeitet, in die sich eine Ausstanzung am Filmende einsenkt und verhakt. In der ersten Anmeldung ist die Austanzung ein sich durch Wegstanzen konisch erweiterndes Filmende, welches sich in ein entsprechend geformtes Kassettenteil einlegt. In der DE - OS 2 711 454 hat das Filmende eine hammerartige Form. Diese Fangvorrichtungen für das Filmende verändern die rechteckige Form des Filmes, d.h. sie unterbrechen die Filmlängskanten, so daß ein Abtasten des Filmes mit Infarotphotozellen, wie es zum bildweisen Transport in automatischen Kopiergeräten benutzt wird, nicht möglich ist. Ferner werden durch diese Ausstanzungen die Filmquerschnitte geschwächt. Bei spröden Filmen oder zu starkem Zug in nicht friktionierten Photoapparaten kann das Filmende leicht abreißen und die Einziehsperre untauglich machen.

Aufgabe der Erfindung ist es, eine sicher wirkende Einziehsperre zu finden, die nicht zu Abdrücken oder Beschädigung des Filmes führt und den Filmquerschnitt weitgehendst erhält um ein Abreißen zu vermeiden, wobei die Filmlängskanten nicht unterbrochen werden.

Diese Aufgabe wurde erfindungsgemäß dadurch gelöst, daß der Kassettensteg im Bereich des Filmkanals vor dem Aufwickelraum abgesenkt ist, so daß im Kassettensteg eine Mulde gebildet ist und sich in der Mulde ein aus der Kassettenwand heraus geformtes, federndes Sperrelement befindet, dessen mit der Kassettenwand verbundenes Ende eine Verjüngung und dessen freies Ende einen Noppen aufweist, der in ein Loch am Ende des Films eingreift, wenn der Film von der Vorratskammer in die Aufwickelkammer transportiert wird, so daß das Sperrelement vom Film gegen die Filmbegrenzungswand mit seinem Noppen in eine dort vorhandene Aussparung und gleichzeitig mit einer Abschrägung in eine Aussparung im aufwickelseitigen Ende des Kassettenstegs gezogen wird, wodurch der Filmkanal über einen Teil seiner Länge verschlossen und damit der Film vor dem völligen Einziehen in die Aufwickelkammer festgeklemmt wird.

Weiterhin wurde gefunden, daß es zweckmäßig ist den Papierschutzstreifen im Bereich des Fangloches im Film mit einem mehrfach größeren Loch auszustatten oder durch eine Ausstanzung parallel zur Kante schmaler zu gestalten.

In einer zweckmäßigen Ausführungsform wird das Sperrelement durch eine Ausstanzung im Kassettensteg gebildet und die Ausstanzung auf der Außenseite des Stegs mit einem Etikett überklebt, wobei als Etikett ein normales Papieretikett mit einem Halfkleber oder mit einem sonstigen Klebstoff in bekannter Weise aufgebracht werden kann. Es kann aber auch ein lichtundurchlässiges Etikett aus Metall oder lichtundurchlässigem Kunststoff heirzu verwendet werden, um an dieser Stelle die lichtundurchlässige Rückwand wieder herzustellen.

Für den Fachmann war es überraschend, daß diese erfindungsgemäße Ausbildung eines Fanghakens außerhalb de Aufwickelraumes exakt bei jedem Film unter den verschiedensten Umweltbedingungen in den Film einhakt und eine gewünschte Länge des Filmes daran hindert, in den Aufwickelraum gezogen zu werden. Die Anordnung des Fanghakens in einer Mulde verhindert eine Beschädigung des Papierschutzstreifens oder des Filmes und der Querschnitt des Filmes ist weder wesentlich geschwächt noch sind die Längskanten unterbrochen, was für die automatische Weiterverarbeitung hinderlich wäre.

Eine Ausführungsform der Erfindung wird im folgenden an Hand von Zeichnungen beschrieben.

Es zeigt

Fig. 1 eine Aufsicht auf die Kassettenaußenseite;

Fig. 2 eine Aufsicht auf die Kasetteninnenseite;

Fig. 3 einen Längsschnitt durch den
Kassettensteg und den Aufwickelraum;

Fig. 4 Spule, Papierschutzstreifen und Film
mit den Ausstanzungen.

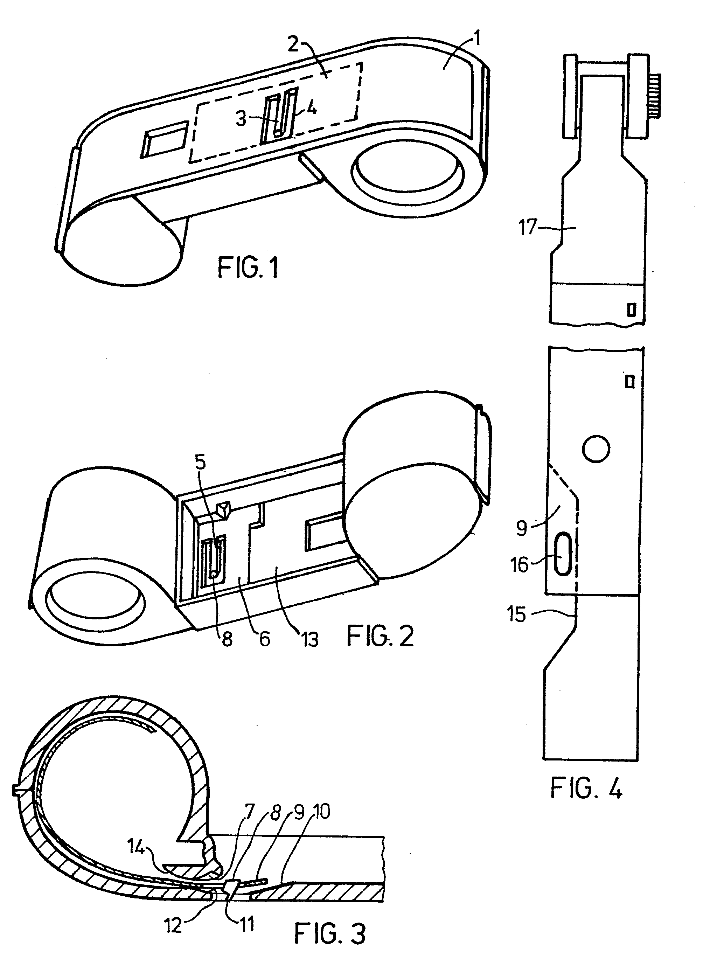

In der Rückwand 1 des Deckels der Kassette
ist im Bereich des aufwickelseitigen Teils des
Kassettensteges 13 eine U-förmige Aussparung 4 so geschaffen, daß ein Sperrelement
3 freigestellt ist. Das Sperrelement 3 besitzt an
der Seite mit welcher es an der Kassette befestigt ist eine Verjüngung 5, die eine Biegestelle
bestimmt (Sollbiegestelle). Das Sperrelement ist
in einer Mulde 6 (Fig. 2) angeordnet, welche von
der Kassettenwand, die die Filmebene im Steg
13 bildet, durch eine Schräge 10 abgesenkt ist.
Dem Sperrelement 3 ist in seiner Biegeachse
eine Schräglage zugeordnet (siehe Winkel in
Fig. 3), so daß bei Verbiegung des Sperrelementes 3 in der Transportrichtung des Films,
dieses aus der Mulde 6 heraus in den Führungskanal des Filmes gegen die Filmkanalbegrenzungswand 14 des Aufwickelraumes gebogen
wird (Fig. 3). Das Sperrelement 3 besitzt an
seinem freien Ende einen Noppen 8, der in
seiner Höhe so ausgelegt ist, daß er gerade die
Filmebene erreicht, ohne in diese beim Transport des Filmes während der Aufnahmen einzudringen.

An der Unterseite des Sperrelementes 3 ist
am freien Ende ein Anschlag 11 in Form einer
Abschrägung angeformt, der nur eine bestimmte Verbiegung des Sperrelementes zuläßt
und somit eine definierte Endlage des gesperrten Filmes 9 garantiert.

In die Filmkanalbegrenzungswand 14 is als
Gegenlager für den Noppen 8 des Sperrelementes 3 eine Aussparung 7 eingeformt in
die der Noppen 8 nach dem Einspringen in das
Loch 16 des Filmendes 9 gezogen wird. Auf der
Gegenseite ist in den Deckel am aufwickelseitigen Ende der Mulde 6 eine Schräge 12
eingeformt, die für die Schräge 11 des Sperrelementes 3 als Auflaufebene dient. Das Sperrelement 3 kann so mit den beiden Teilen 7 und
12 in Verbindung gebracht werden, daß der
Filmkanal zum Aufwickelraum über einen Teil
seiner Länge verschlossen ist.

Die Wirkungsweise der Einziehsperre ist
folgende:

Der Film 9 und der Papierschutzstreifen 17
haben kurz vor dem Ende ein Langloch in Transportrichtung, wobei das Langloch oder eine
Aussparung 15 des Papierschutzstreifens länger
ist als das Langloch 16 des Filmes 9.

Das Sperrelement 3 mit den Mitnehmernoppen 8 liegt während des Filmtransportes bei
den Aufnahmen in Ruhe ohne jeden Druck
gegen den Papierschutzstreifen.

Werden gegen Filmende die Langlöcher von
Papierschutzstreifen und Film über das Sperrelement 3 mit dem Mitnehmernoppen 8 gezogen, so sind Film und Papierstreifen am Ende,
nach der letzten Aufnahme, bereits entlastet
und folgen ihrer aus dem Abwickelraum
erhaltenen Rolltendenz und werden dadurch in
die Mulde 6 mit dem Sperrelement 3 gedrückt.
Der Noppen 8 springt daher in das Filmloch 16
ein und verhakt mit diesem. Durch weiteren
Filmtransport wird das Sperrelement 3 gegen
die Anschläge 7 und 12 gezogen und der Kanal
verschlossen.

Ein übergleiten des Filmes ist bei dieser formschlüssigen Verbindung unter Zug nicht mehe
möglich und der Film bleibt in der gewünschten
Endlage, die alleine von der Größe und dem Ort
des Filmlangloches 16 abhängig ist. Durch Zug
am Film entgegen der Transportrichtung bei der
Aufnahme löst sich die Sperre sofort und der
Film kann ohne Beschädigung aus dem Aufwickelraum gezogen werden.

**Patentansprüche**

1. Kassette für Rollfilme mit einer spulenlosen Vorratskammer für einen Wickel aus Film
(9) und Papierschutzstreifen (17), einer Aufwickelkammer mit Spule zur Aufnahme des belichteten Films und des Papierschutzstreifens,
einem dazwischen angeordneten Kassettensteg (13), der eine rückwärtige Auflagefläche
sowie eine Führung für den Film bildet und
dessen aufwickelseitiges Ende zusammen mit
einer Filmbegrenzungswand (14) der Aufwickelkammer einen zum Aufwickelraum der
Aufwickelkammer führenden Filmkanal begrenzt und einer Sperrvorrichtung (3,7,8,11,12)
zum Verhindern des völligen Einziehens des
Films in die Aufwickelkammer, dadurch gekennzeichnet, daß der Kassettensteg (13) im
Bereich des Filmkanals vor dem Aufwickelraum
abgesenkt ist, so daß im Kassettensteg eine
Mulde (6) gebildet ist und sich in der Mulde ein
aus der Kassettenwand heraus geformtes,
federndes Sperrelement (3) befindet, dessen mit
der Kassettenwand verbundenes Ende eine Verjüngung (5) und dessen freies Ende einen
Noppen (8) aufweist, der in ein Loch (16) am
Ende des Films (9) eingreift, wenn der Film von
der Vorratskammer in die Aufwickelkammer
transportiert wird, so dâ das Sperrelement vom
film gegen die Filmbegrenzungswand (14) mit
seinem Noppen (8) in eine dort vorhandene
Aussparung (7) und gleichzeitig mit einer
Abschrägung (11) in eine Aussparung (12) im
aufwickelseitigen Ende des Kassettenstegs gezogen wird, wodurch der Filmkanal über einen
Teil seiner Länge verschlossen und damit der
Film vor dem völligen Einziehen in die Aufwickelkammer festgeklemmt wird.

2. Kassette für Rollfilme nach Anspruch 1,
dadurch gekennzeichnet, daß der Papierschutzstreifen (17) im Bereich des Filmloches (16)
eine Aussparung besitzt.

3. Kassette für Rollfilme nach den
Ansprüchen 1 und 2, dadurch gekennzeichnet,
daß das Sperrelement (3) durch eine Ausstanzung (4) im Kassettensteg gebildet und die Ausstanzung auf der Außenseite des Stegs mit einem Etikett (2) überklebt ist.

## Revendications

1. Cassette pour pellicule en bobine, comprenant une chambre de réserve sans bobine destinée à un enroulement d'une pellicule (9) et d'une bande protectrice de papier (17), une chambre d'enroulement à bobine de logement de la pellicule exposée et de la bande protectrice de papier, un dos (13), disposé entre ces chambres, formant une surface d'appui arrière ainsi qu'un guide pour la pellicule et dont l'extrémité située du côté de l'enroulement délimite avec une cloison (14) de la chambre d'enroulement un canal pour la pellicule qui débouche dans l'espace intérieur de la chambre d'enroulement, ladite cassette comprenant par ailleurs un dispositif d'arrêt ou de blocage (3, 7, 8, 11, 12) destiné à empêcher la pellicule de pénétrer en totalité dans la chambre d'enroulement, cassette caractérisée en ce que son dos (13) est évidé dans le canal au devant de la chambre d'enroulement de manière à comporter un alvéole (6) dans lequel se trouve un élément d'arrêt élastique (3) en saillie sur la paroi de la cassette et dont l'extrémité reliee à cette paroi comporte un rétrécissement (5), tandis que son extrémité libre comporte un bouton (8) qui pénètre dans un trou (16) de l'extrémité de la pellicule (9) lorsque celle-ci est transportée de la chambre de réserve dans la chambre d'enroulement, de sorte que l'élément d'arrêt est tiré par la pellicule contre ladite cloison (14) par son bouton (8) qui se place dans une cavité (7) que comporte ladite cloison (14), un chanfrein (11) de cet élément d'arrêt étant simultanément tiré dans un evidement (12) de l'extrémité du dos situé du côté de l'enroulement, de sorte que le canal de la pellicule est obturé sur une partie de sa longueur et donc que cette pellicule est immobilisée en étant empêchée de s'insérer en totalité dans la chambre d'enroulement.

2. Cassette pour pellicule en bobine selon la revendication 1, caractérisée en ce que la bande protectrice de papier (17) comporte une échancrure (15) au niveau du trou (16) de la pellicule.

3. Cassette pour pellicule en bobine selon l'une des revendications 1 et 2, caractérisée en ce que l'élément d'arrêt (3) est formé par poinçonnage dans le dos de la cassette et l'entaille (4) ainsi réalisée est recouverte du côté extérieur du dos par une étiquette collée (2).

## Claims

1. A cassette for roll films having a spool-less supply chamber for a roll of film (9) and protective paper strip (17), a take-up chamber with a spool for taking up the exposed film and the protective paper strip, a cassette bridge (13) arranged between the chambers, which forms a rear contact surface and a guide for the film and the take-up end thereof together with a film-limiting wall (14) in the take-up chamber encloses a film passage leading to the take-up area in the take-up chamber, and a catch element (3, 7 8, 11, 12) for preventing the film from being drawin completely into the take-up chamber, characterised in that the cassette bridge (13) has a depression in the area of the film passage prior to the take-up chamber, so that a depression (6) is formed in the cassette bridge and a resilient catch element (3), formed from the cassette wall, is located in the depression and the end of the catch element which is connected with the cassette wall has a taper (5) and the free end has a knob (8) which engages in a perforation (16) at the end of the film (9) when the film is being transported from the supply chamber to the take-up chamber, so that the catch element is drawn by the film towards the film-limiting wall (14), its knob (8) being drawn into a recess (7) located there and a slope (11) on the catch element being at the same time drawn into a recess (12) in the take-up end of the cassette bridge, whereby the film passage is sealed over a section of its length and thus the film is jammed before complete withdrawal into the take-up chamber.

2. A cassette for roll films according to Claim 1, characterised in that the protective paper strip (17) has a notch in the region of the film perforation (16).

3. A cassette for roll films according to Claims 1 and 2, characterised in that the catch element (3) is formed by a punched out area (4) in the cassette bridge and a label (2) is affixed to the outer side of the bridge over the punched out area.

0 003 511

1/1

FIG.1

FIG. 2

FIG. 3

FIG. 4

1